(19) Europäisches Patentamt
European Patent Office
Office européen des brevets

(11) **EP 3 575 427 B1**

(12) **EUROPEAN PATENT SPECIFICATION**

(45) Date of publication and mention
of the grant of the patent:
**03.04.2024 Bulletin 2024/14**

(21) Application number: **18744836.0**

(22) Date of filing: **25.01.2018**

(51) International Patent Classification (IPC):
*C22C 38/00* (2006.01)   *C21D 8/02* (2006.01)
*C21D 9/00* (2006.01)   *C22C 38/44* (2006.01)
*C22C 38/52* (2006.01)   *C22C 38/60* (2006.01)
*B32B 15/01* (2006.01)

(52) Cooperative Patent Classification (CPC):
**B32B 15/011; C21D 8/02; C21D 9/00; C22C 38/00;
C22C 38/44; C22C 38/52; C22C 38/60**

(86) International application number:
**PCT/JP2018/002220**

(87) International publication number:
**WO 2018/139513 (02.08.2018 Gazette 2018/31)**

(54) **DUAL-PHASE STAINLESS CLAD STEEL AND METHOD FOR PRODUCING SAME**

ZWEIPHASIGER EDELSTAHLARMIERTER STAHL UND VERFAHREN ZUR HERSTELLUNG DAVON

ACIER INOXYDABLE À DEUX PHASES PLAQUÉE ET SON PROCÉDÉ DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.01.2017 JP 2017012020**

(43) Date of publication of application:
**04.12.2019 Bulletin 2019/49**

(73) Proprietor: **JFE Steel Corporation
Tokyo, 100-0011 (JP)**

(72) Inventors:
• **KURONUMA, Yota**
**Tokyo 100-0011 (JP)**
• **YOKOTA, Tomoyuki**
**Tokyo 100-0011 (JP)**
• **HASE, Kazukuni**
**Tokyo 100-0011 (JP)**

(74) Representative: **Grünecker Patent- und
Rechtsanwälte
PartG mbB
Leopoldstraße 4
80802 München (DE)**

(56) References cited:
**JP-A- S60 216 984     JP-A- S61 180 686
JP-A- 2004 131 743     JP-A- 2005 133 125
JP-A- 2010 180 459     JP-A- 2014 114 466
JP-A- 2015 105 399     JP-B2- 5 803 890**

**Description**

Technical Field

The present invention relates to a dual phase stainless clad steel used in high chloride environments such as seawater, and a method for manufacturing the same. A dual phase stainless clad steel refers to a steel material obtained by bonding together two types of steels with different properties, i.e., a dual phase stainless steel material as a cladding material and an ordinary steel material as a base material.

Background Art

Conventionally, dual phase stainless steels have been employed in high chloride environments, such as seawater, and highly corrosive environments, such as oil wells and gas wells. Specifically, dual phase stainless steels have been employed in pipes of oil wells and gas wells, structural components of flue gas desulfurization facilities, effluent treatment facilities, and seawater-pumped storage power plants, paper-machine rolls, centrifugal separators, pumps, valves, heat exchangers, etc. A dual phase stainless steel is a stainless steel having a multiphase microstructure constituted by two phases, namely, an austenite phase (referred to as a gamma phase (y phase) hereinafter) and a ferrite phase (referred to as an alpha phase ($\alpha$ phase) hereinafter), and has both excellent corrosion resistance and excellent strength properties; in general, this steel is known to exhibit highest corrosion resistance when the area ratio of the austenite phase to the ferrite phase is approximately 1:1. Thus, the chemical composition of practical dual phase stainless steels is specified so that the area ratio of the austenite phase to the ferrite phase is around this ratio.

Japanese Industrial Standards (JIS) standardize SUS329JI, SUS329J3L, SUS329J4L, etc., as bar and sheet materials from such a viewpoint. Furthermore, SUS329J1FB is standardized as steel forgings, and SCS10 is standardized as steel castings, for example.

Meanwhile, the price of alloying elements, such as Cr, Ni, and Mo, which are main raw materials of the dual phase stainless steel, has undergone steep rise and significant fluctuation from time to time; thus, recently, clad steels that can more economically utilize the excellent rustproof performance of high-alloy steels than when a solid material (a material having a metal composition of a cladding material throughout its thickness) is used have gathered attention.

A high-alloy clad steel is a steel material obtained by bonding two types of metals with different properties, namely, a high-alloy steel material having high corrosion resistance as a cladding material and an ordinary steel material as a base material. A clad steel is obtained by metallurgically bonding dissimilar metals and, unlike plated steels, has no risk of separation; thus, the clad steel offers novel properties not achievable by single metals or alloys.

Clad steels can offer functions comparable to those of solid materials if a cladding material having a function suitable for purpose for each operation environment is selected. Moreover, a carbon steel and a low-alloy steel suitable for use in severe environments and having high toughness and high strength other than corrosion resistance can be used as the base material of the clad steel.

As such, since clad steels use less alloying elements such as Cr, Ni, and Mo than solid materials, and can reliably obtain rustproof performance comparable to that of solid materials as well as strength and toughness comparable to those of carbon steels and low-alloy steels, there is an advantage in that economical efficiency and functionality can both be achieved.

In view of the above, clad steels that use a high alloy as a cladding material are considered to be very useful functional steel materials, and demand for such clad steels has grown in recent years in various industrial fields.

Patent Literature 1 discloses a method that can delay precipitation of the sigma phase without sacrificing the corrosion resistance. Patent Literature 2 discloses a method for improving mechanical properties and corrosion resistance by adding Ti and Nb so that carbon (C) in the dual phase stainless cast steel forms carbides, Tie and NbC. Patent Literature 3 discloses suppressing the C content in the cladding material of an austenitic stainless clad steel to a low level so that a partially recrystallized microstructure or a recrystallized microstructure is formed as the microstructure, thereby suppressing precipitation of carbides and improving corrosion resistance.

A further cladding metal of a two-phase stainless clad steel used as a structural member, a two-phase stainless clad steel using the same, and its manufacturing method is disclosed in JP 5 803890 B2.

Citation List

Patent Literature

PTL 1: Japanese Patent No. 3779043

PTL 2: Japanese Examined Patent Application Publication No. 62-5988
PTL 3: International Publication No. 2015/059909

Summary of Invention

Technical Problem

In particular, heretofore, a SUS316L clad steel has been used as the material for the chemical tanker tanks. Recent years have seen increasing demand for substituting the SUS316L clad steel by a dual phase stainless clad steel having higher corrosion resistance.

The dual phase stainless steel used in the dual phase stainless clad steel sometimes undergoes changes in properties due to changes in metal microstructure caused by thermal influence. Changes in metal microstructure occur in respective temperature ranges, for example, an increase in the ferrite phase (referred to as the alpha phase ($\alpha$ phase) hereinafter) in a high temperature range of melting temperature to 1200°C, precipitation of dissimilar phases such as intermetallic compounds and carbonitrides in an intermediate temperature range of 600 to 900°C, and the reaction considered to be caused by decomposition of the alpha phase occurring in a low temperature range of 450 to 500°C; along with such changes, the corrosion resistance and the strength properties also change. Among the microstructural changes described above, precipitation of the intermetallic compounds such as a sigma phase ($\sigma$ phase) and carbides such as $Cr_{23}C_6$ poses problems in practical applications. When the sigma phase and carbides precipitate, depleted zone where corrosion resistant elements such as Cr and Mo are depleted are formed therearound, and the corrosion resistance is significantly deteriorated. Thus, precipitation of the sigma phase and carbides needs to be controlled.

Patent Literature 1 involves a method of performing a solution treatment to prevent precipitation of the sigma phase, and when the sigma phase precipitates the entire material is temporarily heated to and held at a temperature equal to or higher than the solid solution temperature of the sigma phase, and is then quenched to eliminate the sigma phase. However, when a clad steel is concerned, heating to and retaining a temperature equal to or higher than the solid solution temperature of the sigma phase poses a problem in that the crystal grains of the low-alloy steel constituting the base material coarsen and thus significantly deteriorate the mechanical properties.

Regarding Patent Literature 2, since corrosion resistance of a dual phase stainless steel is significantly affected by precipitation of the sigma phase, the area fractions of the alpha phase and the gamma phase, etc., it is possible that corrosion resistance sufficient to replace the SUS316L clad steel may not be obtained from the dual phase stainless steel.

Regarding Patent Literature 3, the cladding material is of a SUS316L clad steel grade, and since the contents of the alloy components contributing to the corrosion resistance are low, there is a problem in that sufficient corrosion resistance cannot be obtained even when precipitation of carbides is suppressed.

A conceivable approach for improving corrosion resistance of a dual phase stainless steel that can be used as a substitute of the SUS316L clad steel is to improve alloy components in addition to controlling precipitation of the sigma phase and carbides. For example, decreasing the amount of Cr added suppresses precipitation of the sigma phase. This is because the basic structure of the sigma phase is configured as Fe:Cr = 1:1 or the like. Likewise, decreasing the amount of Mo added can delay precipitation of the sigma phase. However, decreasing the amounts of Cr and Mo added is detrimental to corrosion resistance of the metal matrix. In other words, delaying precipitation of the sigma phase by this method sacrifices corrosion resistance at the same time, and there is a problem in that it is difficult to simply decrease the amounts of Cr and Mo. In addition, decreasing the C content suppresses precipitation of carbides. However, excessively decreasing the C content increases the smelting load, and the manufacturing cost increases as a result.

As mentioned above, presently, there is no established method for preventing precipitation of a sigma phase and carbides in a dual phase stainless steel without sacrificing corrosion resistance. In particular, when manufacturing a clad steel, it is difficult to perform a solution treatment of dissolving the sigma phase and carbides due to the limitation of retaining mechanical properties of the base material; thus, the issue of preventing degradation of corrosion resistance of a dual phase stainless steel cladding material attributable to precipitation of a sigma phase and carbides has not yet been solved.

Under the aforementioned circumstances, an object of the present invention is to provide a dual phase stainless clad steel having excellent corrosion resistance and a method for manufacturing the same by suppressing precipitation of the sigma phase and carbides.

Solution to Problem

In order to address the aforementioned issue, the inventors of the present invention pursuing a substitute for the SUS316L clad steel have used a large number of various test materials based on known dual phase stainless steels to evaluate the influence of the respective alloying elements on how readily the sigma phase precipitates, and have carried out evaluation tests related to corrosion resistance. As a result, the inventors have found that precipitation of the sigma phase and carbides can be delayed without sacrificing corrosion resistance by strictly regulating the allowable amounts of particular elements among impurity elements, and thus have arrived at the present invention.

The present invention is as specified in the appended claims.

Advantageous Effects of Invention

The present invention provides a dual phase stainless clad steel having excellent corrosion resistance since the allowable amounts of particular elements in the cladding material are strictly regulated and precipitation of the sigma phase and carbides is suppressed without sacrificing the corrosion resistance.

Description of Embodiments

1. Regarding component composition of cladding material

First, the reasons for regulating the component composition of the cladding material of the present invention are described. Note that % means mass% throughout.

C: 0.030% or less

Carbon (C) is one of unavoidable elements in steel materials. At a C content exceeding 0.030%, precipitation of carbides occurs extensively, and corrosion resistance is deteriorated. Thus, the C content is set to 0.030% or less. Preferably, the C content is 0.001 to 0.025%.

Si: 0.20% or more and 1.00% or less

Silicon (Si) is an element that significantly accelerates precipitation of the sigma phase, and the Si content needs to be 1.00% or less in order to suppress precipitation of the sigma phase. Moreover, Si is an element that irreversibly enters the steel from raw materials such as iron ore, and suppressing the Si content to less than 0.20% increases the cost of the steel making process. Thus, the Si content is set to more than 0.20% and 1.00% or less. Preferably, the Si content is 0.20 to 0.50%.

Mn: 1.50% or less

Manganese (Mn) is an element useful for deoxidation. At a Mn content exceeding 1.50%, Mn forms MnS and deteriorates corrosion resistance, in particular, pitting corrosion resistance. Thus, the Mn content is set to 1.50% or less. Preferably, the Mn content is 0.01 to 1.00%.

P: 0.0400% or less

At a phosphorus (P) content exceeding 0.0400%, toughness and corrosion resistance are deteriorated. Phosphorus is an incidental impurity, and the P content is preferably decreased as much as possible; however, a P content up to 0.0400% is allowable. Thus, the P content is set to 0.0400% or less. However, the dephosphorization process required to decrease the P content to less than 0.0001% takes a long time during the process of smelting the molten steel, and this increases the manufacturing cost; thus, the P content is preferably 0.0001% or more. Preferably, the P content is 0.0001 to 0.0300%.

S: 0.0100% or less

At a sulfur (S) content exceeding 0.0100%, not only hot workability but also corrosion resistance, in particular, pitting corrosion resistance, is deteriorated. Sulfur is an incidental impurity, and the S content is preferably decreased as much as possible; however, a S content up to 0.0100% is allowable. Thus, the S content is set to 0.0100% or less. However, the desulfurization treatment required to decrease the S content to less than 0.0001% takes a long time during the process of smelting the molten steel, and this increases the manufacturing cost; thus, the S content is preferably 0.0001% or more. Preferably, the S content is 0.0001% to 0.0050%.

Ni: 4.50 to 7.00%

Nickel (Ni) is an element essential for stabilizing a gamma phase, which is one of the two phases of the dual phase stainless steel. This effect is exhibited at a Ni content of 4.50% or more. However, Ni is an expensive metal and increases the cost of the alloy, thereby making the alloy more expensive than conventional alloys when contained in a large amount. Thus, the Ni content is set to 4.50 to 7.00%. As mentioned above, since the dual phase stainless steel exhibits highest corrosion resistance when the ratio of the gamma phase to the alpha phase is approximately 1:1, the Ni content is set to 4.50 to 7.00% in order to satisfy this phase ratio. Preferably, the Ni content is 4.50 to 6.50%.

Cr: 21.0 to 24.0%

Chromium (Cr) is an element indispensable for assuring corrosion resistance of the alloy and stabilizing the alpha phase, which is the other of the two phases of the dual phase stainless steel. In order to obtain this effect, the Cr content needs to be 21.0% or more. However, at a Cr content exceeding 24.0%, precipitation of the sigma phase is significantly accelerated, and ductility and toughness are adversely affected. Thus, the Cr content is set to 21.0 to 24.0%. As mentioned above, since the dual phase stainless steel exhibits highest corrosion resistance when the ratio of the gamma phase to the alpha phase is approximately 1:1, the Cr content is set to 21.0 to 24.0% in order to satisfy this phase ratio. Preferably, the Cr content is 22.0 to 23.0%.

Mo: 2.5 to 3.5%

Molybdenum (Mo) is important as an element that improves corrosion resistance, in particular, pitting corrosion resistance and crevice corrosion resistance, of the alloy. In order to obtain this effect, the Mo content needs to be 2.5% or more. However, at a Mo content exceeding 3.5%, precipitation of the sigma phase is significantly accelerated, and ductility and toughness are adversely affected. Thus, the Mo content is set to 2.5 to 3.5%. As mentioned above, since the dual phase stainless steel exhibits highest corrosion resistance when the ratio of the gamma phase to the alpha phase is approximately 1:1, the Mo content is set to 2.5 to 3.5% in order to satisfy this phase ratio. Preferably, the Mo content is 3.0 to 3.5%.

N: 0.08 to 0.20%

Nitrogen (N) is important as an element that improves corrosion resistance, in particular, pitting corrosion resistance, and at the same time is also effective as an element that improves strength. In order to obtain this effect, the N content needs to be 0.08% or more. However, at a N content exceeding 0.20%, welding properties of the alloy are adversely affected. Thus, the N content is set to 0.08 to 0.20%. As mentioned above, since the dual phase stainless steel exhibits highest corrosion resistance when the ratio of the gamma phase to the alpha phase is approximately 1:1, the N content is set to 0.08 to 0.20% in order to satisfy this phase ratio. Preferably, the N content is 0.10 to 0.20%.

PI: 34.0 to 38.0

PI is a pitting index (pitting corrosion resistance index) and is defined by formula (1) below:

$$PI = Cr + 3.3Mo + 16N \quad (1)$$

where the element symbols respectively represent mass% of the elements.

The higher the PI value, the higher the pitting corrosion resistance, and sufficient pitting corrosion resistance is exhibited at a PI value of 34.0 or more. However, at a PI value exceeding 38.0, the risk of precipitation of the sigma phase and carbides increases. Since this also increases the alloying cost, the PI value is set to 34.0 to 38.0. Preferably, the PI value is 34.0 to 36.0.

Note that the PI value calculated by the calculation formula above is an index value of the pitting corrosion resistance of a solution-treated material having a sigma phase fraction and a carbide fraction of 0% described below. Meanwhile, when at least one of the sigma phase and carbides is precipitated, the pitting corrosion resistance is determined by the balance between the PI value and the "sigma phase + carbides" fraction. As the PI value increases, the pitting corrosion resistance of the material is improved. However, since the Cr, Mo, and N contents increase, precipitation of the sigma phase is promoted. Thus, the PI value range appropriate for the component composition of the present invention is 34.0 to 38.0.

The basic components of the cladding material of the present invention are as described above. In order to further improve the properties, the following ranges of Cu, W, Co, Ti, and Nb may optionally be contained in addition to the components described above.

Cu: 0.01 to 1.50%

Copper (Cu) is an element that improves corrosion resistance, and this effect is exhibited at a Cu content of 0.01% or more. However, at a Cu content exceeding 1.50%, hot workability is significantly deteriorated. Thus, if Cu is to be contained, the Cu content is 0.01 to 1.50%. Preferably the Cu content is 0.01 to 1.00%.

W: 0.01 to 1.50%

Tungsten (W) is an element that improves corrosion resistance, in particular, pitting corrosion resistance, of the alloy, and its effect is exhibited at a W content of 0.01% or more. However, at a W content exceeding 1.50%, the sigma phase precipitation is accelerated. Thus, if W is to be contained, the W content is 0.01 to 1.50%.
Preferably the W content is 0.01 to 1.00%.

Co: 0.01 to 1.50%

Cobalt (Co) is also an element that improves corrosion resistance, and its effect is exhibited with a Co content of 0.01% or more. However, the alloying cost increases at a Co content exceeding 1.50%. Thus, if Co is to be contained, the Co content is 0.01 to 1.50%. Preferably the Co content is 0.01 to 1.00%.

Ti: 0.01 to 0.25%

Titanium (Ti) has a property to readily bond with C, and, when contained in the alloy, can delay precipitation of carbides, such as $Cr_{23}C_6$, detrimental to corrosion resistance. The effect is obtained at a Ti content of 0.01% or more. At a Ti content exceeding 0.25%, the alloying cost rises without improved effects. Thus, if Ti is to be contained, the Ti content is 0.01 to 0.25%. Preferably the Ti content is 0.01 to 0.20%.

Nb: 0.01 to 0.25%

As with Ti, niobium (Nb) has a property to readily bond with C, and, when contained in the alloy, can delay precipitation of carbides, such as $Cr_{23}C_6$, detrimental to corrosion resistance. The effect is obtained at a Nb content of 0.01% or more. At a Nb content exceeding 0.25%, the alloying cost rises without improved effects. Thus, if Nb is to be contained, the Nb content is 0.01 to 0.25%. Preferably the Nb content is 0.01 to 0.20%.
The balance is Fe and incidental impurities. The properties of the cladding material do not significantly change even when at least one of Sn: 0.2% or less, Sb: 0.2% or less, Zr: 0.2% or less, Mg: 0.02% or less, Ca: 0.02% or less, and REM: 0.2% or less is contained. The component composition of the cladding material may contain the aforementioned elements and the balance being Fe and incidental impurities.

2. Regarding component composition of base material

From the viewpoint of corrosion resistance of the cladding material, the base material of the dual phase stainless clad steel of the present invention is particularly limited. A low carbon steel having the following component ranges is used so that a dual phase stainless clad steel having excellent mechanical properties such as the strength and toughness of the base material can be manufactured.

C: 0.03 to 0.10%

Carbon (C) is an element that improves the strength of steel, and sufficient strength is exhibited at a C content of 0.03% or more. However, at a C content exceeding 0.10%, weldability and toughness are deteriorated. Thus, the C content is 0.03 to 0.10%. Preferably the C content is 0.03 to 0.08%.

Si: 1.00% or less

Silicon (Si) is effective for deoxidation and is an element that improves the strength of steel. However, at a Si content exceeding 1.00%, surface properties and toughness of the steel are deteriorated. Thus, the Si content is 1.00% or less. Preferably the Si content is 0.01 to 0.50%.

Mn: 0.50 to 2.00%

Manganese (Mn) is an element that increases the strength of the steel. Its effect is exhibited at a Mn content of 0.50% or more. However, weldability is deteriorated and the alloying cost increases at a Mn content exceeding 2.00%. Thus, the Mn content is 0.50 to 2.00%. Preferably the Mn content is 0.50 to 1.50%.

P: 0.05% or less

Phosphorus (P) is an incidental impurity in the steel, and a P content exceeding 0.05% deteriorates toughness. The amount of P as an incidental impurity is preferably decreased as much as possible; however, a P content up to 0.05% is allowable. Thus, the P content is 0.05% or less. However, the dephosphorization treatment required to decrease the P content to less than 0.0001% takes a long time during the process of smelting the molten steel, and this increases the manufacturing cost. Thus, the P content is preferably 0.0001% or more. More preferably, the P content is 0.0001 to 0.0200%.

S: 0.05% or less

As with P, sulfur (S) is an incidental impurity in the steel. At a S content exceeding 0.05%, toughness is deteriorated. The amount of sulfur as an incidental impurity is preferably decreased as much as possible; however, a S content up to 0.05% is allowable. Thus, the S content is 0.05% or less. However, the desulfurization process required to decrease the S content to less than 0.0001% takes a long time during the process of smelting the molten steel, and this increases the manufacturing cost. Thus, the S content is preferably 0.0001% or more. More preferably, the S content is 0.0001 to 0.0100%.

The basic components of the base material of the present invention are as described above. In order to further improve the properties, the following ranges of Cu, Cr, Ni, Mo, Al, Nb, V, Ti, Ca, B, and REM may be selectively contained in addition to the components described above.

Cu: 0.01 to 0.50%

Copper (Cu) is an element that improves hardenability, and improves the strength and toughness of the steel after rolling. This effect is obtained at a Cu content of 0.01% or more. However, at a Cu content exceeding 0.50%, weldability and toughness are deteriorated. Thus, if Cu is to be contained, the Cu content is 0.01 to 0.50%.
Preferably, the Cu content is 0.05 to 0.30%.

Cr: 0.01 to 0.50%

As with Cu, chromium (Cr) is an element that improves hardenability of the steel, and improves the strength and toughness of the steel after rolling. This effect is obtained at a Cr content of 0.01% or more. However, at a Cr content exceeding 0.50%, weldability and toughness are deteriorated. Thus, if Cr is to be contained, the Cr content is 0.01 to 0.50%. Preferably, the Cr content is 0.05 to 0.30%.

Ni: 0.01 to 1.00%

Nickel (Ni) improves hardenability of the steel and is an element particularly effective for improving the toughness. This effect is obtained at a Ni content of 0.01% or more. However, weldability is deteriorated and the alloying cost increases at a Ni content exceeding 1.00%.
Thus, if Ni is to be contained, the Ni content is 0.01 to 1.00%. Preferably the Ni content is 0.05 to 0.50%.

Mo: 0.01 to 0.50%

Molybdenum (Mo) is also an element that improves hardenability, and improves the strength and toughness of the steel after rolling. This effect is obtained at a Mo content of 0.01% or more. However, at a Mo content exceeding 0.50%, weldability and toughness are deteriorated. Thus, if Mo is to be contained, the Mo content is 0.01 to 0.50%. Preferably the Mo content is 0.05 to 0.30%.

Al: 0.005 to 0.300%

Aluminum (Al) is added as a deoxidant. The deoxidizing effect is exhibited at an Al content of 0.005% or more.

7

However, at an Al content exceeding 0.300%, the toughness of the weld zone is deteriorated. Thus, if Al is to be contained, the Al content is 0.005 to 0.300%.

Preferably the Al content is 0.01 to 0.10%.

Nb: 0.005 to 0.300%

Niobium (Nb) precipitates as NbC and has an effect of increasing the strength of the steel. Moreover, during rolling in the austenite region (γ region), Nb expands the recrystallization temperature range to low temperatures and makes crystal grains finer; thus, Nb is effective for improving the toughness also. These effects are obtained at a Nb content of 0.005% or more. However, at a Nb content exceeding 0.300%, coarse NbC is formed, and the toughness is deteriorated. Thus, if Nb is to be contained, the Nb content is 0.005 to 0.300%. Preferably the Nb content is 0.010 to 0.100%.

V: 0.001 to 0.400%

Vanadium (V) improves the strength of the steel by forming carbonitrides. This effect is obtained at a V content of 0.001% or more. However, at a V content exceeding 0.400%, the toughness is deteriorated. Thus, if V is to be contained, the V content is 0.001 to 0.400%. Preferably the V content is 0.005 to 0.200%.

Ti: 0.005 to 0.100%

Titanium (Ti) forms carbonitrides and makes crystal grains finer, and thus improves the strength and toughness of the steel. This effect is obtained at a Ti content of 0.005% or more. However, at a Ti content exceeding 0.100%, the toughness of the steel including the weld is deteriorated. Thus, if Ti is to be contained, the Ti content is 0.005 to 0.100%. Preferably the Ti content is 0.005 to 0.050%.

Ca: 0.0003 to 0.0050%

Calcium (Ca) makes the microstructure of the weld heat affected zone finer and improves toughness. This effect is obtained at a Ca content of 0.0003% or more. However, at a Ca content exceeding 0.0050%, coarse inclusions are formed and the toughness is deteriorated. Thus, if Ca is to be contained, the Ca content is 0.0003 to 0.0050%.

Preferably the Ca content is 0.0005 to 0.0030%.

B: 0.0003 to 0.0030%

Boron (B) improves hardenability, and improves the strength and toughness of the steel after rolling. This effect is obtained at a B content of 0.0003% or more. However, the toughness of the weld is deteriorated at a B content exceeding 0.0030%. Thus, if B is to be contained, the B content is 0.0003 to 0.0030%. Preferably the B content is 0.0005 to 0.0020%.

REM: 0.0003 to 0.0100%

As with Ca, REM makes the microstructure of the weld heat affected zone finer and improves toughness. This effect is obtained at a REM content of 0.0003% or more. However, at a REM content exceeding 0.0100%, coarse inclusions are formed and the toughness is deteriorated. Thus, if REM is to be contained, the REM content is 0.0003 to 0.0100%. Preferably, the REM content is 0.0005 to 0.0050%.

The balance other than the elements described above is Fe and incidental impurities. The component composition of the base material preferably contains the aforementioned elements and the balance being Fe and incidental impurities.

3. Regarding metal microstructure of cladding material

As described above, it has been known that the dual phase stainless steel that serves as the cladding material exhibits highest corrosion resistance when the ratio of the phase fraction of the alpha phase to the phase fraction of the gamma phase is approximately 1:1. Thus, the phase fractions (area fractions) of the alpha phase and the gamma phase are each set to 30 to 70% so that sufficient corrosion resistance can be exhibited. The phase fractions are preferably 40 to 60%.

In order to obtain high corrosion resistance, the sum of the phase fractions (area fractions) of the sigma phase of the precipitates and carbides that deteriorate corrosion resistance is set to 1.0% or less. Preferably, the sum is 0.5% or less.

Regarding the phase fraction (area fraction), the total of the alpha phase, the gamma phase, the sigma phase, and carbides is 100%, and, when the sigma phase and carbides are absent, the total of the alpha phase and the gamma phase is 100%.

3. Method for manufacturing dual phase stainless clad steel

The method for manufacturing a dual phase stainless clad steel of the present invention will now be described. Note that the temperature conditions in the present invention are surface temperatures of the raw materials and steel plates.

The raw material for the base material and the raw material for the cladding material of the dual phase stainless clad steel of the present invention are adjusted to be within the component ranges described above, and can be melted by a common method or the like. A slab assembly for clad rolling can be assembled by using these raw materials for the base material and the cladding material. From the viewpoint of manufacturing efficiency, the slab assembly for clad rolling preferably has a base material/cladding material/cladding material/base material stack structure, and, considering warpage during cooling, the base materials preferably have the same thickness, and the cladding materials preferably have the same thickness. Naturally, the assembly method is not limited to the one described above. The slab assembly for clad rolling is heated and then hot-rolled.

Heating temperature: 1050°C or more

The heating temperature is set to 1050°C or more so as to obtain corrosion resistance of the cladding material and the bonding properties between the cladding material and the base material. When the heating temperature is 1050°C or more, it is possible to sufficiently dissolve the sigma phase and/or carbides precipitated during heating or the like. However, when the heating temperature for manufacturing is below 1050°C, the sigma phase and/or carbides remain and, thus, the corrosion resistance of the clad steel is deteriorated. In order to bond the cladding material and the base material, rolling in a high-temperature range is advantageous. At a heating temperature below 1050°C, the reduction amount in the high temperature range cannot be sufficiently obtained and the bonding properties are deteriorated. Thus, in order to obtain corrosion resistance of the cladding material and the bonding properties between the cladding material and the base material, the heating temperature is set to 1050°C or more. Meanwhile, at a heating temperature exceeding 1250°C, crystal grains significantly coarsen, and toughness of the base material is deteriorated. Thus, the heating temperature is preferably 1050 to 1250°C and more preferably 1100 to 1200°C.

Reduction ratio: 2.0 or more

A reduction ratio refers to a ratio of the slab thickness (thickness of clad material before rolling) to the thickness of the clad material after rolling.

The reduction ratio in the hot rolling is set to 2.0 or more. This is because, in bonding to form a clad steel, reduction at a high temperature generates a coupling force between the metals, and since satisfactory bonding is obtained at a reduction ratio of 2.0 or more, the reduction ratio is set to 2.0 or more. Furthermore, at a reduction ratio of 2.0 or more, the crystal grains in the base material become finer, and the toughness of the base material is improved. The range of the reduction ratio is preferably 3.0 to 20.0.

Finish rolling temperature: 900°C or more

When the finish rolling temperature of the hot rolling is less than 900°C, precipitation of the sigma phase and/or carbides in the dual phase stainless steel constituting the cladding material becomes extensive. Thus, the finish rolling temperature is set to 900°C or more. Preferably, the finish rolling temperature is 950°C or more.

Accelerated cooling at cooling rate: 0.5°C/s or more, cooling start temperature: 900°C or more, and cooling stop temperature: 750°C or less

After completion of the hot rolling, accelerated cooling is performed at a cooling rate of 0.5°C/s or more from a cooling start temperature of 900°C or more to a cooling stop temperature of 750°C or less. When the cooling rate in the temperature range of 900 to 750°C is less than 0.5°C/s, corrosion resistance of the cladding material is deteriorated. The crystal grains in the base material become finer, and the toughness of the base material is improved by setting the cooling rate in the temperature range of 900 to 750°C to 0.5°C/s or more. When the cooling start temperature is below 900°C, the sigma phase is likely to precipitate during cooling; thus, the cooling start temperature is set to 900°C or more. The upper limit of the cooling start temperature is preferably 1020°C. When the cooling stop temperature exceeds 750°C, the sigma phase is likely to precipitate after accelerated cooling; thus, the cooling stop temperature is set to 750°C or less. The lower limit of the cooling stop temperature is preferably 650°C. Preferably, the range of the cooling rate is 1.0 to 100°C/s, the range of the cooling start temperature is 950°C or more, and the range of the cooling stop temperature is 700°C or less. At 750°C or less, the precipitation rate of the sigma phase and/or carbides in the dual phase stainless steel constituting the cladding material is slow; thus, cooling from 750°C or lower may involve leaving the steel standing to cool.

The steel plate temperature after rolling and accelerated cooling may be determined by measuring the steel plate surface with a radiation thermometer.

The clad steel material after rolling can be easily separated by using a separation agent preliminarily applied at the cladding material/cladding material interface before rolling.

EXAMPLE 1

The steel types indicated in Table 1 were melted to prepare cladding materials. The steel types indicated in Table 2 were melted to prepare base materials. The cladding materials and the base materials were assembled, and dual phase stainless clad steels were manufactured by the manufacturing methods indicated in Table 3.

[Table 1]

(mass%)

| Cladding material No. | C | Si | Mn | P | S | Ni | Cr | Mo | N | Cu | W | Co | Ti | Nb | PI | Remarks |
|---|---|---|---|---|---|---|---|---|---|---|---|---|---|---|---|---|
| 1 | 0.016 | 0.36 | 0.94 | 0.021 | 0.002 | 5.51 | 22.5 | 3.3 | 0.15 | - | - | - | - | - | 35.8 | Inventive steel |
| 2 | 0.022 | 0.32 | 0.93 | 0.012 | 0.001 | 5.43 | 22.1 | 3.1 | 0.16 | - | - | - | - | - | 34.9 | Inventive steel |
| 3 | 0.014 | 0.39 | 0.97 | 0.021 | 0.001 | 5.76 | 23.1 | 3.0 | 0.14 | 0.03 | 0.15 | - | - | - | 35.2 | Inventive steel |
| 4 | 0.018 | 0.49 | 1.23 | 0.022 | 0.008 | 5.91 | 23.7 | 2.8 | 0.19 | 0.02 | - | - | - | - | 36.0 | Inventive steel |
| 5 | 0.017 | 0.86 | 1.47 | 0.037 | 0.006 | 5.53 | 22.1 | 3.2 | 0.14 | - | 0.01 | - | - | - | 34.9 | Inventive steel |
| 6 | 0.019 | 0.97 | 1.10 | 0.014 | 0.006 | 5.46 | 22.7 | 3.0 | 0.13 | - | - | 0.02 | - | - | 34.7 | Inventive steel |
| 7 | 0.023 | 0.37 | 1.00 | 0.018 | 0.005 | 5.49 | 23.6 | 2.6 | 0.17 | - | - | - | 0.01 | - | 34.9 | Inventive steel |
| 8 | 0.016 | 0.51 | 0.93 | 0.007 | 0.009 | 4.97 | 22.7 | 3.2 | 0.14 | - | - | - | - | 0.01 | 35.5 | Inventive steel |
| 9 | 0.029 | 0.56 | 0.51 | 0.004 | 0.004 | 6.35 | 22.9 | 3.1 | 0.14 | - | - | - | - | - | 35.4 | Inventive steel |
| 10 | 0.017 | 0.78 | 0.04 | 0.040 | 0.008 | 4.50 | 22.8 | 3.0 | 0.14 | - | - | - | - | - | 34.9 | Inventive steel |
| 11 | 0.012 | 0.62 | 0.08 | 0.026 | 0.006 | 7.00 | 22.8 | 2.7 | 0.15 | - | - | - | - | - | 34.1 | Inventive steel |
| 12 | 0.019 | 0.34 | 0.76 | 0.023 | 0.004 | 5.13 | 21.0 | 3.3 | 0.17 | - | - | - | - | - | 34.6 | Inventive steel |
| 13 | 0.017 | 0.24 | 0.97 | 0.022 | 0.003 | 4.87 | 24.0 | 2.6 | 0.16 | - | - | - | - | - | 35.1 | Inventive steel |
| 14 | 0.023 | 0.41 | 0.01 | 0.022 | 0.007 | 6.34 | 23.8 | 2.5 | 0.17 | - | - | - | - | - | 34.8 | Inventive steel |
| 15 | 0.026 | 0.39 | 0.74 | 0.017 | 0.005 | 5.63 | 21.7 | 3.5 | 0.13 | - | - | - | - | - | 35.3 | Inventive steel |
| 16 | 0.021 | 0.37 | 0.65 | 0.019 | 0.003 | 5.30 | 22.8 | 3.0 | 0.20 | - | - | - | - | - | 35.9 | Inventive steel |
| 17 | 0.019 | 0.44 | 1.33 | 0.020 | 0.007 | 5.48 | 22.6 | 3.4 | 0.08 | - | - | - | - | - | 35.1 | Inventive steel |
| 18 | 0.018 | 0.46 | 1.29 | 0.024 | 0.010 | 5.61 | 22.7 | 2.8 | 0.14 | - | - | - | - | - | 34.2 | Inventive steel |
| 19 | 0.013 | 0.58 | 1.20 | 0.027 | 0.006 | 5.43 | 23.8 | 3.4 | 0.18 | - | - | - | - | - | 37.9 | Inventive steel |
| 20 | 0.031 | 0.43 | 0.78 | 0.019 | 0.007 | 5.12 | 22.4 | 3.0 | 0.17 | - | - | - | - | - | 35.0 | Comparative steel |
| 21 | 0.017 | 0.46 | 0.69 | 0.020 | 0.009 | 4.43 | 22.1 | 3.1 | 0.15 | - | - | - | - | - | 34.7 | Comparative steel |
| 22 | 0.019 | 0.39 | 1.36 | 0.019 | 0.004 | 7.08 | 21.4 | 3.2 | 0.15 | - | - | - | - | - | 34.4 | Comparative steel |
| 23 | 0.014 | 0.33 | 0.94 | 0.026 | 0.003 | 6.15 | 20.2 | 3.1 | 0.15 | - | - | - | - | - | 32.8 | Comparative steel |
| 24 | 0.014 | 0.46 | 0.67 | 0.025 | 0.007 | 4.51 | 24.8 | 3.1 | 0.14 | - | - | - | - | - | 37.3 | Comparative steel |

| (mass%) | | | | | | | | | | | | | | | | |
| Cladding material No. | C | Si | Mn | P | S | Ni | Cr | Mo | N | Cu | W | Co | Ti | Nb | PI | Remarks |
|---|---|---|---|---|---|---|---|---|---|---|---|---|---|---|---|---|
| 25 | 0.017 | 0.51 | 0.88 | 0.025 | 0.006 | 6.22 | 23.7 | 2.4 | 0.16 | - | - | - | - | - | 34.2 | Comparative steel |
| 26 | 0.016 | 0.44 | 0.73 | 0.027 | 0.008 | 4.76 | 23.1 | 3.6 | 0.15 | - | - | - | - | - | 37.4 | Comparative steel |
| 27 | 0.021 | 0.46 | 1.03 | 0.026 | 0.004 | 6.33 | 22.2 | 3.4 | 0.07 | - | - | - | - | - | 34.5 | Comparative steel |
| 28 | 0.016 | 0.43 | 0.46 | 0.027 | 0.008 | 4.56 | 22.4 | 2.9 | 0.21 | - | - | - | - | - | 35.3 | Comparative steel |
| 29 | 0.023 | 0.47 | 0.52 | 0.016 | 0.009 | 5.49 | 22.5 | 2.7 | 0.12 | - | - | - | - | - | 33.3 | Comparative steel |
| 30 | 0.022 | 0.37 | 0.89 | 0.014 | 0.007 | 5.22 | 24.0 | 3.5 | 0.20 | - | - | - | - | - | 38.8 | Comparative steel |
| Note: Underlines indicate figures outside the scope of the present invention. | | | | | | | | | | | | | | | | |

[Table 2]

| (mass%) | | | | | | | | | | | | | | | | | |
|---|---|---|---|---|---|---|---|---|---|---|---|---|---|---|---|---|---|
| Base material No. | C | Si | Mn | P | S | Cu | Cr | Ni | Mo | Al | Nb | V | Ti | Ca | B | REM | Remarks |
| A | 0.06 | 0.49 | 1.21 | 0.02 | 0.04 | - | - | - | - | - | - | - | - | - | - | - | Inventive steel |
| B | 0.05 | 0.47 | 1.33 | 0.04 | 0.01 | - | - | - | - | - | - | - | - | - | - | - | Inventive steel |
| C | 0.07 | 0.58 | 0.84 | 0.01 | 0.01 | - | - | - | - | - | - | - | - | - | - | - | Inventive steel |
| D | 0.10 | 0.12 | 1.32 | 0.03 | 0.03 | - | - | - | - | - | - | - | - | - | - | - | Inventive steel |
| E | 0.04 | 0.98 | 1.75 | 0.01 | 0.02 | - | - | - | - | - | - | - | - | - | - | - | Inventive steel |
| F | 0.03 | 0.51 | 0.52 | 0.02 | 0.03 | - | - | - | - | - | - | - | - | - | - | - | Inventive steel |
| G | 0.04 | 0.41 | 1.98 | 0.02 | 0.02 | - | - | - | - | - | - | - | - | - | - | - | Inventive steel |
| H | 0.05 | 0.43 | 1.63 | 0.05 | 0.02 | - | - | - | - | - | - | - | - | - | - | - | Inventive steel |
| I | 0.05 | 0.39 | 1.64 | 0.03 | 0.05 | - | - | - | - | - | - | - | - | - | - | - | Inventive steel |
| J | 0.06 | 0.23 | 1.21 | 0.03 | 0.03 | 0.03 | - | - | - | - | - | - | - | - | - | - | Inventive steel |
| K | 0.03 | 0.54 | 0.87 | 0.03 | 0.03 | - | 0.02 | - | - | - | - | - | - | - | - | - | Inventive steel |
| L | 0.07 | 0.46 | 0.96 | 0.01 | 0.04 | - | - | 0.03 | - | - | - | - | - | - | - | - | Inventive steel |
| M | 0.07 | 0.43 | 0.56 | 0.02 | 0.04 | - | - | - | 0.04 | - | - | - | - | - | - | - | Inventive steel |
| N | 0.09 | 0.39 | 0.96 | 0.02 | 0.03 | - | - | - | - | 0.005 | - | - | - | - | - | - | Inventive steel |
| O | 0.04 | 0.47 | 1.12 | 0.03 | 0.02 | - | - | - | - | - | 0.006 | - | - | - | - | - | Inventive steel |
| P | 0.04 | 0.22 | 1.46 | 0.02 | 0.03 | - | - | - | - | - | - | 0.002 | - | - | - | - | Inventive steel |
| Q | 0.06 | 0.26 | 1.55 | 0.02 | 0.03 | - | - | - | - | - | - | - | 0.005 | - | - | - | Inventive steel |
| R | 0.05 | 0.29 | 1.36 | 0.03 | 0.02 | - | - | - | - | - | - | - | - | 0.0003 | - | - | Inventive steel |
| S | 0.05 | 0.27 | 1.49 | 0.03 | 0.02 | - | - | - | - | - | - | - | - | - | 0.0003 | - | Inventive steel |
| T | 0.06 | 0.34 | 1.64 | 0.04 | 0.04 | - | - | - | - | - | - | - | - | - | - | 0.0003 | Inventive steel |

[Table 3]

| Manufacturing method No. | Heating temperature (°C) | Reduction ratio | Finish rolling temperature (°C) | Cooling rate (°C/s) | Cooling start temperature (°C) | Cooling stop temperature (°C) |
|---|---|---|---|---|---|---|
| A1 | 1150 | 5.1 | 985 | 1.8 | 980 | 680 |
| A2 | 1050 | 4.6 | 920 | 2.7 | 920 | 650 |
| A3 | 1250 | 4.2 | 1020 | 0.9 | 1010 | 690 |
| A4 | 1200 | 2.0 | 955 | 11.9 | 950 | 720 |
| A5 | 1100 | 2.7 | 930 | 0.5 | 930 | 700 |
| A6 | 1150 | 3.3 | 900 | 3.7 | 900 | 710 |
| A7 | 1100 | 4.0 | 945 | 14.6 | 940 | 750 |
| A8 | <u>1040</u> | 3.5 | 925 | 6.3 | 920 | 670 |
| A9 | 1100 | <u>1.8</u> | 990 | 0.7 | 980 | 650 |
| A10 | 1100 | 3.1 | <u>890</u> | 0.8 | <u>880</u> | 730 |
| A11 | 1150 | 4.5 | 955 | <u>0.4</u> | 950 | 720 |
| A12 | 1100 | 4.7 | 930 | 0.9 | <u>890</u> | 750 |
| A13 | 1150 | 4.5 | 940 | 1.6 | 930 | <u>760</u> |

Note: Underlines indicate figures outside the scope of the present invention.

From each of the obtained clad steels, a test piece was taken, and phase fraction measurement, corrosion resistance evaluation, bonding property evaluation, and toughness evaluation were performed.

(1) Phase fraction measurement

The phase fraction was determined by electrolytic etching a portion of the cladding material with a 40% NaOH solution and processing a color image, which was taken with an optical microscope, with image processing software so as to calculate the area fractions of the alpha phase, the gamma phase, the sigma phase, and the carbides. When a dual phase stainless steel is electrolytically etched in a 40% NaOH solution, the etched microstructure exhibits different shades of gray in portions corresponding to the sigma phase, the alpha phase, the carbides, and the gamma phase, in the descending order of density, and, thus, the phases can be distinguished from one another.

(2) Corrosion resistance evaluation

The corrosion resistance was evaluated through JIS G 0578 Method of ferric chloride tests - Testing method (B). The testing method involved immersing a test piece for 72 hours in a 6% $FeCl_3$ + N/20 aqueous hydrochloric acid solution heated to a desired temperature ($\pm$1)°C, and then observing the surface of the test piece after the testing with an optical microscope to confirm absence or presence of pitting corrosion. Samples in which pitting corrosion having a depth of 25 μm or more occurred in the cladding material were evaluated as "pitting corrosion occurred". The temperature at which the pitting corrosion started to occur (CPT: critical pitting temperature) was calculated, and samples with CPT of 35°C or more were evaluated as having good corrosion resistance.

(3) Bonding properties evaluation

The bonding properties of the cladding material and the base material were evaluated through JIS G 0601 Shear strength test. The shear strength test involves separating the cladding material from the base material in a manner parallel to the bonding surface, and the bonding properties are evaluated from the maximum shear strength required for separation. Samples with a shear stress of 200 MPa or more were evaluated as having good bonding properties.

(4) Toughness evaluation

Toughness was evaluated by a Charpy impact test. From the base material, a 10 × 10 mm V-notch Charpy impact test piece specified in JIS Z 2242 was taken, and a Charpy impact test was performed thereon. Samples with a Charpy impact absorption energy value exceeding 100 J at -40°C were evaluated as having good toughness.
The test results are indicated in Table 4.

[Table 4]

| Level No. | Cladding material No. | Base material No. | Manufacturing method No. | Alpha phase fraction (%) | Gamma phase fraction (%) | "Sigma phase + carbides" fraction (%) | CPT (°C) | Shear test (MPa) | Charpy impact test $vE_{-40}$(J) | Remarks |
|---|---|---|---|---|---|---|---|---|---|---|
| 1 | 1 | A | A1 | 45 | 55 | 0.0 | 45 | 312 | 178 | Invention Example |
| 2 | 2 | B | A2 | 53 | 47 | 0.2 | 40 | 263 | 167 | Invention Example |
| 3 | 3 | C | A3 | 51 | 49 | 0.0 | 50 | 334 | 121 | Invention Example |
| 4 | 4 | D | A4 | 46 | 54 | 0.0 | 50 | 210 | 113 | Invention Example |
| 5 | 5 | E | A5 | 43 | 57 | 0.3 | 45 | 305 | 107 | Invention Example |
| 6 | 6 | F | A6 | 52 | 48 | 0.0 | 45 | 346 | 114 | Invention Example |
| 7 | 7 | G | A7 | 47 | 53 | 0.0 | 45 | 326 | 131 | Invention Example |
| 8 | 8 | H | A1 | 56 | 44 | 0.0 | 45 | 312 | 124 | Invention Example |
| 9 | 9 | I | A1 | 55 | 45 | 0.5 | 40 | 309 | 133 | Invention Example |
| 10 | 10 | J | A1 | 62 | 38 | 0.0 | 40 | 326 | 213 | Invention Example |
| 11 | 11 | K | A1 | 38 | 62 | 0.1 | 40 | 319 | 216 | Invention Example |
| 12 | 12 | L | A1 | 37 | 63 | 0.0 | 40 | 324 | 241 | Invention Example |
| 13 | 13 | M | A1 | 68 | 31 | 0.8 | 35 | 323 | 236 | Invention Example |
| 14 | 14 | N | A1 | 32 | 68 | 0.0 | 40 | 307 | 259 | Invention Example |

(continued)

| Level No. | Cladding material No. | Base material No. | Manufacturing method No. | Alpha phase fraction (%) | Gamma phase fraction (%) | "Sigma phase + carbides" fraction (%) | CPT (°C) | Shear test (MPa) | Charpy impact test $vE_{-40}$(J) | Remarks |
|---|---|---|---|---|---|---|---|---|---|---|
| 15 | 15 | O | A1 | 61 | 38 | 1.0 | 35 | 308 | 246 | Invention Example |
| 16 | 16 | P | A1 | 59 | 41 | 0.0 | 40 | 296 | 233 | Invention Example |
| 17 | 17 | Q | A1 | 41 | 59 | 0.0 | 40 | 316 | 241 | Invention Example |
| 18 | 18 | R | A1 | 51 | 49 | 0.0 | 40 | 326 | 261 | Invention Example |
| 19 | 19 | S | A1 | 49 | 51 | 0.4 | 40 | 286 | 234 | Invention Example |
| 20 | 19 | T | A1 | 46 | 54 | 0.4 | 40 | 304 | 216 | Invention Example |
| 21 | 20 | A | A1 | 53 | 46 | 1.2 | 30 | 353 | 164 | Comparative Example |
| 22 | 21 | A | A1 | 73 | 27 | 0.0 | 30 | 297 | 175 | Comparative Example |
| 23 | 22 | A | A1 | 28 | 72 | 0.0 | 30 | 321 | 190 | Comparative Example |
| 24 | 23 | A | A1 | 29 | 71 | 0.0 | 30 | 304 | 184 | Comparative Example |
| 25 | 24 | A | A1 | 72 | 27 | 1.3 | 25 | 346 | 165 | Comparative Example |
| 26 | 25 | A | A1 | 28 | 72 | 0.1 | 30 | 287 | 154 | Comparative Example |
| 27 | 26 | A | A1 | 75 | 24 | 1.4 | 20 | 322 | 181 | Comparative Example |
| 28 | 27 | A | A1 | 74 | 26 | 0.0 | 30 | 316 | 186 | Comparative Example |

EP 3 575 427 B1

(continued)

| Level No. | Cladding material No. | Base material No. | Manufacturing method No. | Alpha phase fraction (%) | Gamma phase fraction (%) | "Sigma phase + carbides" fraction (%) | CPT (°C) | Shear test (MPa) | Charpy impact test $vE_{-40}$(J) | Remarks |
|---|---|---|---|---|---|---|---|---|---|---|
| 29 | 28 | A | A1 | 29 | 71 | 0.0 | 30 | 314 | 176 | Comparative Example |
| 30 | 29 | A | A1 | 55 | 45 | 0.0 | 30 | 311 | 163 | Comparative Example |
| 31 | 30 | A | A1 | 56 | 43 | 1.3 | 30 | 326 | 157 | Comparative Example |
| 32 | 1 | A | A8 | 46 | 53 | 1.2 | 30 | 172 | 189 | Comparative Example |
| 33 | 1 | A | A9 | 47 | 53 | 0.0 | 45 | 135 | 79 | Comparative Example |
| 34 | 1 | A | A10 | 47 | 51 | 1.7 | 25 | 288 | 115 | Comparative Example |
| 35 | 1 | A | A11 | 45 | 54 | 1.4 | 25 | 285 | 67 | Comparative Example |
| 36 | 1 | A | A12 | 49 | 50 | 1.2 | 30 | 312 | 81 | Comparative Example |
| 37 | 1 | A | A13 | 47 | 52 | 1.2 | 30 | 302 | 89 | Comparative Example |
| Note: Underlines indicate figures outside the scope of the present invention. | | | | | | | | | | |

Level Nos. 1 to 20 in which the chemical composition of the cladding material is within the scope of the present invention exhibited good corrosion resistance. Among these, cladding materials with a "sigma phase + carbides" fraction of 0.5% or less exhibited particularly excellent corrosion resistance. Meanwhile, level No. 21 in which the C content in the cladding material is beyond the range of the present invention and level No. 31 in which the PI value of the cladding material is beyond the range of the present invention had a "sigma phase + carbides" fraction exceeding 1.0% and a CPT of 30°C, and thus the corrosion resistance was deteriorated. Level No. 22 in which the Ni content in the cladding material is below the range of the present invention, level No. 23 in which the Ni content in the cladding material is beyond the range of the present invention, level No. 24 in which the Cr content in the cladding material is below the range of the present invention, level No. 26 in which the Mo content in the cladding material is below the range of the present invention, level No. 28 in which the N content in the cladding material is below the range of the present invention, and level No. 29, in which the N content in the cladding material is beyond the range of the present invention exhibited an alpha phase fraction and a gamma phase fraction outside the range of 30 to 70% and a CPT of 30°C, and, thus, the corrosion resistance was deteriorated. Level No. 25 in which the Cr content in the cladding material is beyond the range of the present invention and level No. 27 in which the Mo content in the cladding material is beyond the range of the present invention exhibited an alpha phase fraction and a gamma phase fraction outside the range of 30 to 70%, a "sigma phase + carbides" fraction exceeding 1.0%, and a CPT of 25°C and 20°C, respectively, and, thus, the corrosion resistance was deteriorated. Level No. 30 in which the PI value of the component of the cladding material is below the range of the present invention did not contain sufficient amounts of alloy components to obtain corrosion resistance, and had a CPT of 30°C, and, thus, the corrosion resistance was deteriorated.

Level No. 32 (manufacturing method No. A8) in which the heating temperature was below the range of the present invention had a "sigma phase + carbides" fraction exceeding 1.0%, indicating deteriorated corrosion resistance, and a shear strength of less than 200 MPa, indicating deteriorated bonding properties. Level No. 33 (manufacturing method No. A9) in which the reduction ratio was below the range of the present invention exhibited a shear strength of less than 200 MPa, indicating deteriorated bonding properties, and also the Charpy absorption energy value of the base material at -40°C was 100 J or less, indicating deteriorated base material toughness. Level No. 34 (manufacturing method No. A10) in which the finish rolling temperature and the cooling start temperature were lower than the range of the present invention had a "sigma phase + carbides" fraction exceeding 1.0%, indicating deteriorated corrosion resistance. Level No. 35 (manufacturing method No. A11) in which the cooling rate was smaller than the range of the present invention, level No. 36 (manufacturing method No. A12) in which the cooling start temperature was lower than the range of the present invention, and level No. 37 (manufacturing method No. A13) in which the cooling stop temperature was higher than the range of the present invention had a "sigma phase + carbides" fraction exceeding 1.0%, indicating deteriorated corrosion resistance, and also the Charpy absorption energy value of the base material at -40°C was 100 J or less, indicating deteriorated base material toughness.

## Claims

1. A dual phase stainless clad steel having a dual phase stainless steel layer disposed on one surface or both surfaces of a base material steel plate, in which a component composition of a cladding material of the dual phase stainless clad steel contains, in terms of mass%, C:

   0.030% or less,
   Si: 0.20% or more and 1.00% or less,
   Mn: 1.50% or less,
   P: 0.0400% or less,
   S: 0.0100% or less,
   Ni: 4.50 to 7.00%,
   Cr: 21.0 to 24.0%,
   Mo: 2.5 to 3.5%,
   N: 0.08 to 0.20%,
   optionally, in terms of mass%, at least one selected from
   Cu: 0.01 to 1.50%,
   W: 0.01 to 1.50%,
   Co: 0.01 to 1.50%,
   Ti: 0.01 to 0.25%,
   Nb: 0.01 to 0.25%,
   Sn: 0.2% or less, Sb: 0.2% or less, Zr: 0.2% or less, Mg:

0.02% or less, Ca: 0.02% or less, and REM: 0.2% or less, and the balance being Fe and incidental impurities, wherein a PI defined by formula (1) below is 34.0 to 38.0, and, in the cladding material, an alpha phase and a gamma phase each have a phase fraction of 30 to 70%, and a sum of phase fractions of a sigma phase and carbides is 1.0% or less,

$$PI = Cr + 3.3Mo + 16N \qquad (1),$$

and

wherein a component composition of a base material of the dual phase stainless clad steel contains, in terms of mass%,
C: 0.03 to 0.10%,
Si: 1.00% or less,
Mn: 0.50 to 2.00%,
P: 0.05% or less,
S: 0.05% or less,
optionally, , in terms of mass%, at least one selected from
Cu: 0.01 to 0.50%,
Cr: 0.01 to 0.50%,
Ni:0.01 to 1.00%,
Mo: 0.01 to 0.50%,
Al: 0.005 to 0.300%,
Nb: 0.005 to 0.300%,
V: 0.001 to 0.400%,
Ti: 0.005 to 0.100%,
Ca: 0.0003 to 0.0050%,
B: 0.0003 to 0.0030%, and
REM: 0.0003 to 0.0100%, and
the balance being Fe and incidental impurities.

2. A method for manufacturing a dual phase stainless clad steel, in which, in a cladding material, an alpha phase and a gamma phase each have a phase fraction of 30 to 70%, and a sum of phase fractions of a sigma phase and carbides is 1.0% or less, the method comprising:
heating a steel to 1050°C or more, the steel being a slab assembly in which a component composition of a cladding material contains, in terms of mass%, C: 0.030% or less,

Si: 0.20% or more and 1.00% or less,
Mn: 1.50% or less,
P: 0.0400% or less,
S: 0.0100% or less,
Ni: 4.50 to 7.00%,
Cr: 21.0 to 24.0%,
Mo: 2.5 to 3.5%,
N: 0.08 to 0.20%,
optionally, in terms of mass%, at least one selected from
Cu: 0.01 to 1.50%,
W: 0.01 to 1.50%,
Co: 0.01 to 1.50%,
Ti: 0.01 to 0.25%,
Nb: 0.01 to 0.25%,
Sn: 0.2% or less, Sb: 0.2% or less, Zr: 0.2% or less, Mg:

0.02% or less, Ca: 0.02% or less, and REM: 0.2% or less, and the balance being Fe and incidental impurities, and in which a PI defined by formula (1) below is 34.0 to 38.0; then hot-rolling the steel at a reduction ratio of 2.0 or more and a finish rolling temperature of 900°C or more, and wherein a component composition of a base material of the dual phase stainless clad steel contains, in terms of mass%, C: 0.03 to 0.10%,
Si: 1.00% or less,
Mn: 0.50 to 2.00%,

P: 0.05% or less,

S: 0.05% or less,

optionally, in terms of mass%, at least one selected from

Cu: 0.01 to 0.50%,

Cr: 0.01 to 0.50%,

Ni: 0.01 to 1.00%,

Mo: 0.01 to 0.50%,

Al: 0.005 to 0.300%,

Nb: 0.005 to 0.300%,

V: 0.001 to 0.400%,

Ti: 0.005 to 0.100%,

Ca: 0.0003 to 0.0050%,

B: 0.0003 to 0.0030%, and

REM: 0.0003 to 0.0100%, and

the balance being Fe and incidental impurities; and then immediately performing accelerated cooling at a cooling rate of 0.5°C/s or more, a cooling start temperature of 900°C or more, and a cooling stop temperature of 750°C or less,

$$PI = Cr + 3.3Mo + 16N \quad \cdots(1).$$

**Patentansprüche**

1. Nichtrostender plattierter Dualphasenstahl mit einer auf einer Fläche oder beiden Flächen einer Grundwerkstoff-Stahlplatte angeordneten nichtrostenden Dualphasenstahl-Schicht, bei der eine Komponentenzusammensetzung eines Plattierungswerkstoffs des nichtrostenden plattierenden Dualphasenstahls in Massenprozent Folgendes enthält: C: 0,030 % oder weniger,

   Si: 0,20 % oder mehr und 1,00 % oder weniger,
   Mn: 1,50 % oder weniger,
   P: 0,0400 % oder weniger,
   S: 0,0100 % oder weniger,
   Ni: 4,50 bis 7,00 %,
   Cr: 21,0 bis 24,0 %,
   Mo: 2,5 bis 3,5 %,
   N: 0,08 bis 0,20 %,
   optional in Massenprozent wenigstens ein Element ausgewählt von
   Cu: 0,01 bis 1,50 %,
   W: 0,01 bis 1,50 %,
   Co: 0,01 bis 1,50 %,
   Ti: 0,01 bis 0,25 %,
   Nb: 0,01 bis 0,25 %,
   Sn: 0,2 % oder weniger, Sb: 0,2 % oder weniger, Zr: 0,2 % oder weniger, Mg: 0,02 % oder weniger, Ca: 0,02 % oder weniger, und REM: 0,2 % oder weniger, und wobei der Rest Fe und zufällige Verunreinigungen ist, wobei ein durch die folgende Formel (1) definierter PI 34,0 bis 38,0 ist, und im Plattierungswerkstoff eine Alpha-Phase und eine Gamma-Phase jeweils einen Phasenanteil von 30 bis 70 % aufweisen, und eine Summe von Phasenanteilen einer Sigma-Phase und von Carbiden 1,0 % oder weniger ist, PI = Cr + 3,3 Mo + 16 N (1), und wobei eine Komponentenzusammensetzung eines Grundwerkstoffs des nichtrostenden plattierten Dualphasenstahls in Massenprozent Folgendes enthält:

   C: 0,03 bis 0,10 %,
   Si: 1,00 % oder weniger,
   Mn: 0,50 bis 2,00 %,
   P: 0,05 % oder weniger,
   S: 0,05 % oder weniger,
   optional in Massenprozent wenigstens ein Element ausgewählt von
   Cu: 0,01 bis 0,50 %,

Cr: 0,01 bis 0,50 %,
Ni: 0,01 bis 1,00 %,
Mo: 0,01 bis 0,50 %,
A1: 0,005 bis 0,300 %,
Nb: 0,005 bis 0,300 %,
V: 0,001 bis 0,400 %,
Ti: 0,005 bis 0,100 %,
Ca: 0,0003 bis 0,0050 %,
B: 0,0003 bis 0,0030 %, und
REM: 0,0003 bis 0,0100 %, und
wobei der Rest Fe und unbeabsichtigte Verunreinigungen ist.

2. Verfahren zum Herstellen eines nichtrostenden plattierten Dualphasenstahls, bei dem in einem Plattierungswerkstoff eine Alpha-Phase und eine Gamma-Phase jeweils einen Phasenanteil von 30 bis 70 % aufweisen, und eine Summe von Phasenanteilen einer Sigma-Phase und von Carbiden 1,0 % oder weniger ist, wobei das Verfahren umfasst:

Erhitzen eines Stahls auf 1050 °C oder mehr, wobei der Stahl eine Brammenanordnung ist, bei dem eine Komponentenzusammensetzung eines Plattierungswerkstoffs in Massenprozent Folgendes enthält: C: 0,030 % oder weniger,
Si: 0,20% oder mehr und 1,00% oder weniger,
Mn: 1,50 % oder weniger,
P: 0,0400 % oder weniger,
S: 0,0100 % oder weniger,
Ni: 4,50 bis 7,00 %,
Cr: 21,0 bis 24,0 %,
Mo: 2,5 bis 3,5 %,
N: 0,08 bis 0,20 %,
optional in Massenprozent wenigstens ein Element ausgewählt von
Cu: 0,01 bis 1,50 %,
W: 0,01 bis 1,50 %,
Co: 0,01 bis 1,50 %,
Ti: 0,01 bis 0,25 %,
Nb: 0,01 bis 0,25 %,
Sn: 0,2 % oder weniger, Sb: 0,2 % oder weniger, Zr: 0,2 % oder weniger, Mg: 0,02 % oder weniger, Ca: 0,02 % oder weniger, und REM: 0,2 % oder weniger, und
wobei der Rest Fe und unbeabsichtigte Verunreinigungen ist, und wobei ein durch die folgende Formel (1) definierter PI 34,0 bis 38,0 ist; anschließend Warmwalzen des Stahls mit einem Verkleinerungsgrad von 2,0 oder mehr und einer Fertigwalztemperatur von 900 °C oder mehr, und wobei eine Komponentenzusammensetzung eines Grundwerkstoffs des nichtrostenden plattierten Dualphasenstahls in Massenprozent Folgendes enthält: C: 0,03 bis 0,10 %,
Si: 1,00 % oder weniger,
Mn: 0,50 bis 2,00 %,
P: 0,05 % oder weniger,
S: 0,05 % oder weniger,
optional in Massenprozent wenigstens ein Element ausgewählt von
Cu: 0,01 bis 0,50 %,
Cr: 0,01 bis 0,50 %,
Ni: 0,01 bis 1,00 %,
Mo: 0,01 bis 0,50 %,
A1: 0,005 bis 0,300 %,
Nb: 0,005 bis 0,300 %,
V: 0,001 bis 0,400 %,
Ti: 0,005 bis 0,100 %,
Ca: 0,0003 bis 0,0050 %,
B: 0,0003 bis 0,0030 %, und
REM: 0,0003 bis 0,0100 %, und
wobei der Rest Fe und unbeabsichtigte Verunreinigungen ist; und anschließend unmittelbar danach ein Durchführen eines beschleunigten Abkühlens mit einer Abkühlgeschwindigkeit von 0,5 °C/s oder mehr, einer Kühlstarttemperatur von 900 °C oder mehr und einer Kühlstopptemperatur von 750 °C oder weniger,

$$PI = Cr + 3,3\ Mo + 16\ N\ (1).$$

**Revendications**

1. Acier plaqué inoxydable à deux phases ayant une couche d'acier inoxydable à deux phases disposée sur une surface ou sur les deux surfaces d'une plaque d'acier comme matériau de base, dans lequel une composition en constituants d'un matériau de placage de l'acier plaqué inoxydable à deux phases contient, en termes de % en masse,

C : 0,030 % ou moins,
Si : 0,20 % ou plus et 1,00 % ou moins,
Mn : 1,50 % ou moins,
P : 0,0400 % ou moins,
S : 0,0100 % ou moins,
Ni : 4,50 à 7,00 %,
Cr : 21,0 à 24,0 %,
Mo : 2,5 à 3,5 %,
N : 0,08 à 0,20 %,
éventuellement, en termes de % en masse, au moins un élément choisi parmi

Cu : 0,01 à 1,50 %,
W : 0,01 à 1,50 %,
Co : 0,01 à 1,50 %,
Ti : 0,01 à 0,25 %,
Nb : 0,01 à 0,25 %,
Sn : 0,2 % ou moins, Sb : 0,2 % ou moins, Zr : 0,2 % ou moins, Mg :

0,02 % ou moins, Ca : 0,02 % ou moins et terres rares : 0,2 % ou moins, le reste étant du Fe et des impuretés inévitables, où un PI défini par la formule (1) ci-dessous va de 34,0 à 38,0, et, dans le matériau de placage, une phase alpha et une phase gamma ont chacune une fraction de phase de 30 à 70 %, et une somme des fractions de phase d'une phase sigma et de carbures est inférieure ou égale à 1,0 %,

$$PI = Cr + 3,3Mo + 16N \qquad (1),$$

et

dans lequel une composition en constituants d'un matériau de base de l'acier plaqué inoxydable à deux phases contient, en termes de % en masse,
C : 0,03 à 0,10 %,
Si : 1,00 % ou moins,
Mn : 0,50 à 2,00 %,
P : 0,05 % ou moins,
S : 0,05 % ou moins,

éventuellement, en termes de % en masse, au moins un élément choisi parmi

Cu : 0,01 à 0,50 %,
Cr : 0,01 à 0,50 %,
Ni : 0,01 à 1,00 %,
Mo : 0,01 à 0,50 %,
Al : 0,005 à 0,300 %,
Nb : 0,005 à 0,300 %,
V : 0,001 à 0,400 %,

Ti : 0,005 à 0,100 %,

Ca : 0,0003 à 0,0050 %,

B : 0,0003 à 0,0030 %, et

terres rares : 0,0003 à 0,0100 %, et

le reste étant du Fe et des impuretés inévitables.

2. Procédé de fabrication d'un acier plaqué inoxydable à deux phases dans lequel, dans un matériau de placage, une phase alpha et une phase gamma ont chacune une fraction de phase de 30 à 70 %, et une somme des fractions de phase d'une phase sigma et de carbures est inférieure ou égale à 1,0 %, le procédé comprenant :

le chauffage d'un acier à 1050 °C ou plus, l'acier étant un assemblage de brames dans lequel une composition en constituants d'un matériau de placage contient, en termes de % en masse,

C : 0,030 % ou moins,

Si : 0,20 % ou plus et 1,00 % ou moins,

Mn : 1,50 % ou moins,

P : 0,0400 % ou moins,

S : 0,0100 % ou moins,

Ni : 4,50 à 7,00 %,

Cr : 21,0 à 24,0 %,

Mo : 2,5 à 3,5 %,

N : 0,08 à 0,20 %,

éventuellement, en termes de % en masse, au moins un élément choisi parmi

Cu : 0,01 à 1,50 %,

W : 0,01 à 1,50 %,

Co : 0,01 à 1,50 %,

Ti : 0,01 à 0,25 %,

Nb : 0,01 à 0,25 %,

Sn : 0,2 % ou moins, Sb : 0,2 % ou moins, Zr : 0,2 % ou moins, Mg :

0,02 % ou moins, Ca : 0,02 % ou moins et terres rares : 0,2 % ou moins, le reste étant du Fe et des impuretés inévitables, et dans lequel un PI défini par la formule (1) ci-dessous va de 34,0 à 38,0 ; puis le laminage à chaud de l'acier avec un taux de réduction de 2,0 ou plus et une température de laminage de finissage de 900 °C ou plus, et dans lequel une composition en constituants d'un matériau de base de l'acier plaqué inoxydable à deux phases contient, en termes de % en masse,

C : 0,03 à 0,10 %,

Si : 1,00 % ou moins,

Mn : 0,50 à 2,00 %,

P : 0,05 % ou moins,

S : 0,05 % ou moins,

éventuellement, en termes de % en masse, au moins un élément choisi parmi

Cu : 0,01 à 0,50 %,

Cr : 0,01 à 0,50 %,

Ni : 0,01 à 1,00 %,

Mo : 0,01 à 0,50 %,

Al : 0,005 à 0,300 %,

Nb : 0,005 à 0,300 %,

V : 0,001 à 0,400 %,

Ti : 0,005 à 0,100 %,

Ca : 0,0003 à 0,0050 %,

B : 0,0003 à 0,0030 %, et

terres rares : 0,0003 à 0,0100 %, et

le reste étant du Fe et des impuretés inévitables ; puis la réalisation immédiate d'un refroidissement accéléré à une vitesse de refroidissement de 0,5 °C/s ou plus, une température de début de refroidissement de 900 °C ou plus, et une température d'arrêt de refroidissement de 750 °C ou moins,

$$PI = Cr + 3{,}3Mo + 16N \qquad (1).$$

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5803890 B
- JP 3779043 B
- JP 62005988 B
- JP 2015059909 A